**Europäisches Patentamt**

(19) **European Patent Office**

**Office européen des brevets**

(11) Publication number: **0 127 236**
**B1**

(12) **EUROPEAN PATENT SPECIFICATION**

(45) Date of publication of patent specification: **15.07.87**

(21) Application number: **84200716.3**

(22) Date of filing: **17.05.84**

(51) Int. Cl.⁴: **C 08 F 136/06,** C 08 F 2/02, C 08 F 4/52

(54) **Butadiene polymerisation process.**

(30) Priority: **25.05.83 IT 2128083**

(43) Date of publication of application: **05.12.84 Bulletin 84/49**

(45) Publication of the grant of the patent: **15.07.87 Bulletin 87/29**

(84) Designated Contracting States: **BE DE FR GB NL**

(56) References cited:
EP-A-0 007 027
EP-A-0 092 270
FR-A-2 090 960
GB-A-2 101 616

(73) Proprietor: **ENICHEM ELASTOMERI S.p.A.**
**Via Ruggero Settimo 55**
**I-90139 Palermo (IT)**

(72) Inventor: **Carbonaro, Antonio**
**Via Marescalchi 1**
**I-20133 Milan (IT)**
Inventor: **Gordini, Silvano**
**Via Cupello 4/C**
**I-20097 S. Donato Milanese, Milan (IT)**
Inventor: **Cucinella, Salvatore**
**Via Kennedy 12**
**I-20097 S. Donato Milanese, Milan (IT)**

(74) Representative: **Roggero, Sergio et al**
**Ing. Barzanò & Zanardo Milano S.p.A. Via**
**Borgonuovo 10**
**I-20121 Milano (IT)**

EP 0 127 236 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to the continuous production of cis-1,4-polybutadiene by catalytic polymerization of butadiene in the absence, or substantial absence, of solvents or diluents.

Various catalytic processes for butadiene polymerization are known, which can produce polybutadiene with a high content of cis-1,4-units, especially adapted for the manufacture of tyres and other elastomeric articles. The conventional catalyst are combinations of compounds of transition metals, such as Ti, Co, Ni, U and rare earth metals, with alkyl- and/or hydride derivatives of metals of the Groups IA, IIA, IIIA and IIIB of the Periodic Table, such as described in US—A—3,118,864, 3,178,402, 3,794,604 and 4,242,232 and in the BE—A—559.676, 573.680 and 791.709, as well as in EP—A1—092 270.

Conventionally, butadiene is usually polymerized in a hydrocarbon solution, to control the polymerization temperature and to obtain soluble gel-free, or substantially gel-free linear polymers having a controlled molecular weight.

Producing cis-1,4-polybutadiene by polymerization in bulk has not found a wide acceptance in spite of the advantages afforded by a solvent- or diluent-free procedure.

The reasons for this unsuccessful outcome are mainly the following:

A) The lack of identification of suitable catalytic systems which possess the combination of characteristics required by bulk polymerisation, and more particularly:

— that they should not give rise, in the presence of an excess of monomer, to transfer reactions responsible for producing low molecular weight polymers of little use in applications;
— that they should not give rise to secondary cross-linking, cyclisation and/or branch reactions in the polymer which are responsible for the formation of considerable quantities of gel, which has a strongly negative effect on the required characteristics of the final product;
— that they should have sufficiently high activity so that the final polymer contains a low level of catalytic residues, so as to dispense with the need for washing;
— that they should maintain high activity and selectivity under high temperature conditions such as those required for operating in a high viscous system with sufficient reaction kinetics;

B) The engineering, rheological and heat transfer difficulties connected with the processing of highly viscous masses.

The object of the present invention is therefore a process which, by the combination of a suitable catalytic system and an adequate flow-dynamic system enables the aforesaid difficulties to be overcome in order to obtain high molecular-weight linear cis-1,4-polybutadiene at high yield and free from gel, by polymerisation conducted in the absence of low-boiling hydrocarbon solvents or diluents, or in the presence of a minimum quantity of said low-boiling solvents or diluents generally equal to or less than about 2% by weight with respect to the butadiene monomer.

More particularly, according to the present invention:

— a catalytic mixture is prepared by contacting, in an inert hydrocarbon medium:
   a) at least one neodymium compound selected from among neodymium oxide, alcoholates, phenates and carboxylates;
   b) at least one organic compound containing hydroxyl(alcoholic or phenolic) or carboxylic groups selected from among alcohols, phenols, and carboxylic acids, water being optionally added;
   c) at least one halogenated compound selected from among secondary or tertiary alkyl halides, aryl or alkylaryl halides, organic acid halides, metal or organometallic halides, hydrogen halide acids and halogens, and
   d) at least one aluminium organometal hydride or derivatives thereof,

the quantities of the compounds a) and b) being such as the ratio of the hydroxyl groups (those of water included) and/or carboxyl groups to the neodymium atoms being between 2:1 and 100:1, said components being contacted so as to obtain a catalytic mixture wherein the Al/Nd atomic ratio is between 20:1 and 200:1 and the halogen/Nd atomic ratio is between 0,2:1 and 3:1, the solvents or diluents, if used, being not more than 2% of the weight of the butadiene monomer;

— continuously feeding said catalytic mixture and liquid butadiene monomer, optionally premixed, in the proportion of between $4.10^4$ and $4.10^5$ gram.mol of butadiene per gram.atom of Nd, to one end of an elongated polymerization reactor in which the mixture is polymerized under plug-flow conditions, while maintaining an inlet temperature not lower than 30°C and an outlet temperature not higher than 130°C, and controlling the temperature within said range by partial evaporation of butadiene monomer from the liquid polymerisation phase, until a mixture is obtained having a polymer content of between about 25% and about 70% by weight, this being discharged from the other end of the reactor;
— the cis-1,4-polybutadiene is separated and recovered from said discharged mixture.

The vehicle used for the catalyst according to the present invention can be constituted by low-boiling or relatively low-boiling inert (non-reactive) hydrocarbons such as butane, pentane, hexane and heptane, linear or branched, or their mixtures. These hydrocarbons, introduced with the catalyst, are separated from the polybutadiene at the end of the polymerisation stage. ·

According to a further embodiment, the catalyst vehicle is constituted by hydrocarbons or hydrocarbon mixtures of high molecular weight such as paraffin oil and the like, or hydrocarbon oils required for oil-extended polybutadiene formulations.

These hydrocarbons do not require separation and remain incorporated in the polybutadiene. In particular, it has been found that when the content of paraffin oil and the like is less than about 5% by weight in the polymer, the characteristics of these latter are not appreciably modified.

The neodymium compounds used in the catalyst preparation are chosen from neodymium oxide $(Nd_2O_3)$, neodymium alcoholates derived from aliphatic and cycloaliphatic alcohols, neodymium phenates and neodymium carboxylates derived from aliphatic, cycloaliphatic and aromatic organic acids. Of these, the preferred compounds are neodymium oxide, neodymium tributylate and neodymium trinaphthenates.

The organic compounds containing hydroxyl groups (alcoholic or phenolic) or carboxyl groups are chosen from aliphatic and cycloaliphatic alcohols, phenols and substituted phenols, and aliphatic, cycloaliphatic and aromatic acids.

Of these, butyl alcohol and naphthenic acids are preferred. These compounds can be used in free form or partially or totally combined with the neodymium (neodymium alcoholates, phenates and carboxylates), provided the ratio of hydroxyl groups (including those of water) and/or combined carboxyl groups to neodymium atoms is in the range of between 2:1 and 100:1.

It has been found that the addition of small quantities of water as a hydroxyl contributor is desirable in that it improves the catalyst activity. More particularly, this effect of the water is manifested on maintaining the ratio of aluminium atoms in the aluminium organometal compound or relative hydride derivative to the added moles of water within a range of between 1:1 and 5:1, with a preferred value of around 2:1.

The halogen contributor compounds used in the catalyst preparation are preferably chosen from hydrochloric acid, diethyl aluminium chloride, ethyl aluminium dichloride, aluminium trichloride, tert.butyl chloride, benzyl chloride and benzoyl chloride. In particular, hydrochloric acid can be fed in the form of aqueous hydrochloric acid, so as to also provide the desired water quantity.

The aluminium organometal compounds and relative hydride derivatives are the aluminium trialkyls and aluminium alkyl hydrides. Preferably triethylaluminium, triisobutylaluminium and diisobutylaluminium monohydride are used.

The quantities of the various catalyst components are chosen so as to respect an aluminium:neodymium atomic ratio of between 20:1 and 200:1, and a halogen:neodymium atomic ratio of between 0.2:1 and 3:1. In the preferred embodiment, the aforesaid ratios are of the order of between 3:1 and 30:1 for the ratio of hydroxyl groups (including those of water) and/or carboxyl groups to neodymium atoms, of the order of between 25:1 and 80:1 for the ratio of aluminium atoms to neodymium atoms, and of the order of between 1:1 and 2:1 for the ratio of halogen atoms to neodymium atoms.

According to the process of the present invention, the catalytic mixture is prepared by bringing the aforesaid catalytic components into contact in the hydrocarbon vehicle, operating at a temperature equal to or greater than ambient.

The order and manner of adding the catalytic components are not critical, however according to one embodiment the components are brought into contact in the hydrocarbon vehicle in the following order at ambient temperature (20°—25°C):

— neodymium alcoholate, phenate and/or carboxylate;
— aluminium organometal compound and/or relative hydride derivative;
— halogenated compound;
— hydroxyl and/or carboxyl compound and possibly water.

According to a further embodiment, they are brought into contact in the hydrocarbon vehicle in the following order at a temperature of 50°—80°C:

— neodymium oxide;
— hydroxylated and/or carboxylated organic compound;
— halogenated compound;
— water.

The mixture is then cooled to ambient temperature (20°—25°C) and an aluminium organometal compound or relative hydride derivative is added.

By operating in the aforesaid manner, a catalytic solution is obtained, or alternatively a catalytic mixture in which the catalyst is for the most part dissolved in the relative hydrocarbon vehicle.

The catalytic mixture prepared in this manner is mixed with liquid butadiene monomer in a proportion such as to obtain a ratio of g.moles of butadiene to g.atoms of neodymium of between $4.10^4$ and $4.10^5$. The mixing can be carried out in any device which ensures good homogenisation, for example an agitated vessel. Mixing is carried out at a temperature suitably chosen to prevent rapid butadiene polymerisation before its entry into the polymerisation reactor, and preferably at a temperature of between 20° and 30°C.

3

In a further embodiment, a stream of the catalytic mixture and a stream of liquid butadiene are independently fed into the polymerisation reactor, in quantities such as to respect the aforesaid ratios.

In all cases, the feed takes place at one end of an elongated polymerisation reactor in which the mixture can flow under plug-flow or substantially plug-flow conditions. Extruders in which the mass under polymerisation is driven by single-screw or double-screw self-cleaning agitators are for example suitable.

The polymerisation is generally conducted between an inlet temperature of not less than 30°C and an outlet temperature of not more than 130°C, and preferably between an inlet temperature of the order of 50°—60°C and an outlet temperature of the order of 80°—100°C, so as to allow the mass to flow, the mass becoming increasingly more viscous as the polymerisation proceeds.

The temperature is controlled by partially evaporating the butadiene monomer, which can be recycled to the polymerisation stage after condensation, without any need for purification.

A certain quantity of the heat of polymerisation can also be removed by feeding cold streams to the polymerisation reactor.

The pressure at which the polymerisation is conducted is such as to ensure that the butadiene monomer is present in the liquid phase.

For the aforesaid temperature range, said pressure is conveniently chosen between 3 and 18 bars absolute.

When operating within the aforesaid general conditions, a mixture is discharged at the other end of the reactor having a polymer content of between about 25% and about 70% by weight, when operating with a residence time of between 10 and 120 minutes. Under the preferred operating conditions, the residence time is of the order of 20—60 minutes. For reasons of economy, it is convenient to operate with a relatively high conversion value for the conversion of butadiene into the relative polymer, so as to discharge mixtures with a polymer content of 60—70% by weight from the reactor.

According to one embodiment of the present invention, the mixture leaving the polymerisation reactor is fed to a mixing device in which polymerisation arresting (short stopper) agents and stabilisers against polymer thermo-oxidative degradation, preferably in solution in butadiene, are fed. The catalyst is deactivated by preferably using water or higher aliphatic alcohols (containing for example between 8 and 18 carbon atoms in the molecule) in such a quantity as to exceed the sum of the catalytic components by at least 5—10 times.

Basifying agents soluble in the short stopper, such as ammonia, amines, epoxides and organic salts (alcoholates and carboxylates) of alkaline metals, are preferably added thereto.

In addition to the usual antioxidants for preserving the polymer, such as sterically hindered phenols and phosphites, radical capturing agents such as secondary amines and the said epoxides are also preferably added to the hydrocarbon solution. The two solutions can conveniently be emulsified together.

The mass treated in this manner is then fed to a further heated screw device (extruder-desolventiser), where the volatile substances are removed by evaporation, by operating at a temperature in the range of 100° to 180°C and a pressure equal or close to atmospheric pressure.

This treatment removes the unconverted butadiene, any low-boiling solvent introduced with the catalytic mixture, and any water introduced in excess to that required for the destruction of the catalytic system. The butadiene and any low-boiling solvent are subjected to the usual treatments for their separation and recycling.

By operating in accordance with the process of the present invention, a polybutadiene is typically obtained in dry stabilised form, with a volatile substance content less than about 1% by weight.

This polybutadiene also has a content of cis-1,4 units which generally exceeds 97%, and a Mooney viscosity (M.L. 1+4, 100°C) of from 30 to 80 and beyond.

Consequently with the process of the present invention, it is possible to obtain a linear polybutadiene free from gel and with a very high content of cis-1,4 units. Said polymer requires no washing for separating the catalytic residues.

Moreover, the process of the present invention is simple and convenient, has low energy consumption, and presents no problems of an ecological character, given that there are no effluents.

The experimental examples given hereinafter are illustrative of the present invention.

Example 1

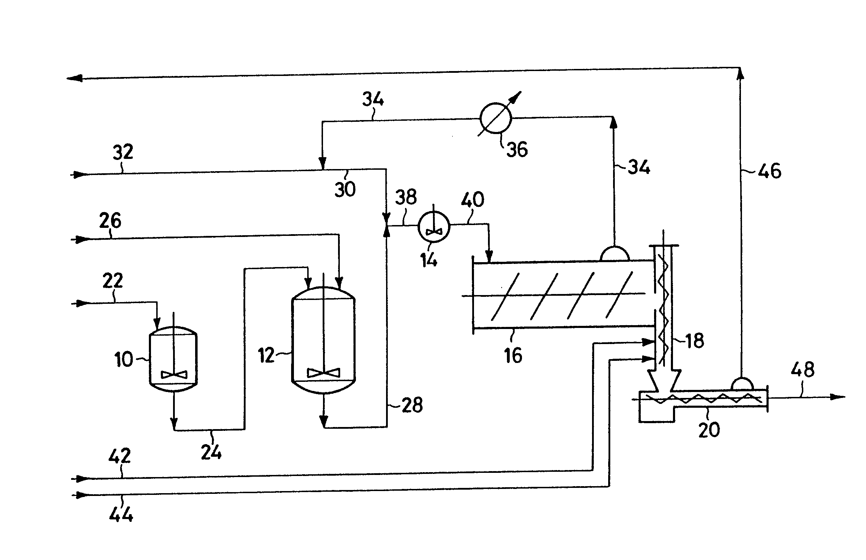

With reference to Figure 1, the vessel 10 which has a capacity of 5 l, and is provided with an agitator and a heat transfer system, is fed under a nitrogen atmosphere with the following through the line 22:

— 130 g (0.367 moles) of 95% neodymium oxide ($Nd_2O_3$);
— 549 g (2.255 moles) of naphthenic acid, with an acid value of 230;
— 6.1 ml of an aqueous 37% weight solution of hydrochloric acid;
— 854 g of n-hexane.

In this mixture, the ratio of carboxyl and hydroxyl groups, contributed by the naphthenic acid and water, to the number of neodymium atoms is 3.2:1.

The mixture is kept agitated in the vessel 10 under a nitrogen atmosphere at a temperature of 60°C for 3 hours. At the end of this time period, a turbid solution is obtained with the appearance of an oil.

The solution obtained in this manner is fed through line 24 into the vessel 12, which has a capacity of 120 l and is provided with an agitator. 43 l of a solution containing 0.914 moles/l of aluminium diisobutylmonohydride in hexane are also fed into the vessel 12 through the line 26.

The mass is kept agitated under nitrogen at ambient temperature (about 20°C) for one hour.

At the end of this time, 530 ml of a solution containing 1.1 moles/l of aluminium ethyldichloride in hexane are fed into the vessel 12 through the line 26, and the mass is kept agitated for a further 0.5 hours under a nitrogen atmosphere at ambient temperature (about 20°C).

The catalytic solution obtained in this manner has the following concentrations, in terms of neodymium, aluminium and chlorine:

— neodymium:     0.0184  g.atoms/l
— aluminium:     0.8790  g.atoms/l
— chlorine:      0.0275  g.atoms/l.

Consequently the chlorine:neodymium atomic ratio is about 1.5:1 and the aluminium:neodymium atomic ratio is about 48:1.

The catalytic solution is withdrawn from the vessel 12 through the line 28 at a throughput of 455 ml/hour, and is mixed with anhydrous liquid butadiene which is fed through the line 30 at a throughput of 36 l/hour.

Said butadiene comes partly from the fresh butadiene drying section (not shown) through the line 32 (approximately 13 l/hour) and partly by recycling from the reactor 16 through the line 34 (about 23 l/hour) after condensation in 36.

The butadiene and catalytic solution are fed through the line 38 to the mixer 14, which has a capacity of 1.5 l and is fitted with an agitator. The mixing temperature is about 30°C.

The mixture leaving the mixer 14 is fed through the line 40 to the polymerisation reactor 16. The reactor 16 is a reactor of the self-cleaning screw type, with a total volume of 23 l and a useful volume of 16 l, in which the mixture being polymerised flows with plug-flow. The reactor 16 is operated under a pressure of 6.7 bars with an inlet temperature of about 60°C and an outlet temperature of about 90°C. The heat of polymerisation is removed by partial evaporation of the butadiene, which is withdrawn through the line 34 and recycled after condensing in the condenser 36.

Under these conditions, a mixture containing about 70% by weight of polymer is discharged from the reactor 16 and is fed to the screw device 18, into which a solution containing 100 g/l of a commercial antioxidant in butadiene is fed at a throughput of 300 ml/hour through the line 42. Water is fed at a throughput of 150 ml/hour to a point further downstream in the device 18, through the line 44.

The mass treated in this manner is fed to the device 20 for elimination of the volatile components, and in which the residual butadiene, hexane and water are removed at a temperature of 130°C at atmospheric pressure, and are fed to the separation section (not shown) through the line 46.

6 kg/hour of anhydrous butadiene polymer are recovered from the device 20 through the line 48, and has the following characteristics:

— Mooney viscosity (M.L., 1+4, 100°C); 40
— content of cis-1,4 units: 98% (infrared determination)
— ratio of the weighted average molecular weight to the numerical average molecular weight (Mw:Mn): 6.2 (determination by gel permeation chromatography)
— content of volatile substances: 0.5% by weight.

Example 2

With reference to Figure 1, the vessel 10, which has a capacity of 5 l and is provided with an agitator and a heat transfer system, is fed under a nitrogen atmosphere with the following through the line 22:

— 129 g (0.364 moles) of 95% neodymium oxide ($Nd_2O_3$);
— 496 ml (2.037 moles) of naphthenic acid with an acid value of 230;
— 1.5 l of paraffin oil.

The mixture is heated to 80°C under agitation for 2 hours, when 6 ml of an aqueous 37 weight % hydrochloric acid solution is added.

After keeping the mixture at 80°C for a further two hours, it is cooled and diluted under agitation with 3 l of the aforesaid liquid paraffin.

The contents of the vessel 10 are transferred through the line 24 to the vessel 12, into which 1.15 l of a 1 molar solution of tert.butylchloride in the aforesaid liquid paraffin had been previously fed through the line 26.

The mixture is left under agitation for a further two hours at ambient temperature.

**0 127 236**

The catalytic mixture obtained in this manner has the following concentrations of neomydium, aluminium and chlorine:

— neomydium:    0.0139 g.atoms/l
— aluminium:    0.7404 g.atoms/l
— chlorine:    0.0197 g.atoms/l

Consequently the chlorine:neomydium atomic ratio is about 1.4:1 and the aluminium:neomydimum ratio about 53:1.

Proceeding in the same manner as Example 1, 438 ml/hour of the catalytic mixture and 18 l/hour of liquid butadiene containing 80 ppm of water are fed into the mixer 14. The polymerisation reactor 16 is operated with an inlet temperature of 55°C and an outlet temperature of 84°C at a pressure of 6 bars. The screw device 18 is fed with a hexane solution containing 50 g/l of a commercial antioxidant at a throughput of 300 ml/hour, and also, in a parallel feed, with 400 ml/hour of n-decanol.

The screw device 20 is operated in the same manner as Example 1, to discharge through the line 48 3.1 kg/hour of polybutadiene having a content of cis-1,4 units of 97.8% and a Mooney viscosity (M.L., 1+4, 100°C) of 45.

**Claims**

1. A process for preparing cis-1,4-polybutadiene by catalytic polymerization of butadiene, characterized in that:

— a catalytic mixture is prepared by contacting, in an inert hydrocarbon medium:

a) at least one neodymium compound selected from among neodymium oxide, alcoholates, phenates and carboxylates;

b) at least one organic compound containing hydroxyl(alcoholic or phenolic) or carboxylic groups selected from among alcohols, phenols, and carboxylic acids, water being optionally added;

c) at least one halogenated compound selected from among secondary or tertiary alkyl halides, aryl or alkylaryl halides, organic acid halides, metal or organometallic halides, hydrogen halide acids and halogens, and

d) at least one aluminium organometal compounds or relative hydride derivatives thereof,

the quantities of the compounds a) and b) being such that the ratio of the hydroxyl groups (those of water included) and/or carboxyl groups to the neodymium atoms is between 2:1 and 100:1, said components being contacted so as to obtain a catalytic mixture wherein the Al/Nd atomic ratio is between 20:1 and 200:1 and the halogen/Nd atomic ratio is between 0,2:1 and 3:1, the solvents or diluents, if used, being not more than 2% of the weight of the butadiene monomer;

— continuously feeding said catalytic mixture and liquid butadiene monomer, optionally premixed, in the proportion of between $4.10^4$ and $4.10^5$ gram.mol of butadiene per gram.atom of Nd, to one end of an elongated polymerisation reactor in which the mixture is polymerised under plug-flow conditions, while maintaining an inlet temperature of not less than 30°C and an outlet temperature of not greater than 130°C and controlling the temperature within said range by partial evaporation of butadiene monomer from the liquid polymerisation phase, until a mixture is obtained having a polymer content of between about 25% and about 70% by weight, this being discharged from the other end of the reactor;

— the cis-1,4-polybutadiene is separated and recovered from said discharged mixture.

2. A process as claimed in claim 1, characterised in that the hydrocarbon vehicle for the catalyst is chosen from butane, pentane, hexane and heptane, linear or branched, or their mixtures, paraffin oil or hydrocarbon oils for oil-extended polybutadiene formulations.

3. A process as claimed in claim 1, characterised in that the neodymium compounds are chosen from neodymium oxide ($Nd_2O_3$), neodymium tributylate and neodymium trinaphthenates.

4. A process as claimed in claim 1, characterised in that the organic compounds containing hydroxyl or carboxyl groups are chosen from butyl alcohol and naphthenic acids.

5. A process as claimed in claim 1, characterised in that the halogenated compounds are chosen from hydrochloric acid, diethylaluminium chloride, ethylaluminium dichloride, aluminium trichloride, tert.butylchloride, benzyl chloride and benzoyl chloride.

6. A process as claimed in claim 1, characterised in that the aluminium organometal compounds and relative hydride derivatives are chosen from aluminium trialkyl and aluminium alkyl hydrides.

7. A process as claimed in claim 6, characterised in that said aluminium compounds are chosen from triethylaluminium, triisobutylaluminium and diisobutylaluminium monohydride.

8. A process as claimed in claim 1, characterised by adding water to the catalyst in such a quantity that the ratio of the aluminium atoms of the aluminium organometal compound or relative hydride derivative to the added moles of water is between 1:1 and 5:1.

6

9. A process as claimed in claim 8, characterised in that said ratio is of the order of 2:1.

10. A process as claimed in claim 1, characterised in that the ratio of hydroxyl groups (including those of the water) and/or carboxyl groups to neodymium atoms is of the order of 3:1—30:1, the ratio of aluminium atoms to neodymium atoms is of the order of 25:1—80:1, and the ratio of halogen atoms to neodymium atoms is of the order of 1:1—2:1.

11. A process as claimed in claim 1, characterised in that the polymerisation is conducted at a pressure of between 3 and 18 bars absolute.

12. A process as claimed in claim 1, characterised in that the polymerisation is conducted between an inlet temperature of the order of 50°—60°C and an outlet temperature of the order of 80°—100°C.

13. A process as claimed in claim 1, characterised in that the residence time during polymerisation varies from 10 to 120 minutes.

14. A process as claimed in claim 13, characterised in that said residence time is of the order of 20—60 minutes.

15. A process as claimed in claim 1, characterised in that the polymerisation is conducted in an apparatus of the self-cleaning single or double extruder type.

16. A process as claimed in claim 1, characterised in that the butadiene monomer evaporated during polymerisation is condensed and recycled directly to the polymerisation stage.

17. A process as claimed in claim 1, characterised in that polymerisation arresting agents and stabilisers against thermo-oxidative degradation are added to the mixture leaving the polymerisation stage in a mixing device connected in series with the polymerisation reactor.

18. A process as claimed in claim 17, characterised in that the polymerisation arresting agents are chosen from water and $C_8$—$C_{18}$ aliphatic alcohols.

19. A process as claimed in claim 18, characterised in that basifying compounds chosen from ammonia, amines, epoxides and organic salts (alcoholates and carboxylates) of alkaline metals are added to the water and alcohols.

20. A process as claimed in claim 17, characterised in that antioxidants and radical capturing agents such as secondary amines and epoxides are associated with the polymerisation arresting agents.

21. A process as claimed in claims 17 to 20, characterised in that said polymerisation arresting agents and said antiradicals are fed in the form of an emulsion in the presence of butadiene.

22. A process as claimed in claim 1, characterised in that the reaction mixture with its additives is freed of low-boiling substances by operating at a temperature of between 100° and 180°C at atmospheric pressure in a heated screw device connected in series with the mixing device of claim 17.

**Patentansprüche**

1. Verfahren zur Herstellung von cis-1,4-Polybutadien durch katalytische Polymerisation von Butadien, dadurch gekennzeichnet, daß:

— ein katalytisches Gemisch hergestellt wird, indem in einem inerten Kohlenwasserstoffmedium
a) mindestens eine Neodymverbindung ausgewählt unter Neodymoxid, -alkoholaten, -phenolaten und -carboxylaten,
b) mindestens eine organische Verbindung, die alkoholische oder phenolische Hydroxylgruppen oder Carboxylgruppen enthält und unter Alkoholen, Phenolen und Carbonsäuren ausgewählt wird, wobei gegebenenfalls Wasser zugesetzt ist,
c) mindestens eine halogenierte Verbindung, ausgewählt unter sekundären oder tertiären Alkylhalogeniden, Aryl- oder Alkylarylhalogeniden, organischen Säurehalogeniden, Metall- oder Organometallhalogeniden, Halogenwasserstoffsäuren und Halogenen, sowie
d) mindestens eine Aluminium-Organometallverbindung oder ein entsprechendes Hydridderivat davon

in Berührung miteinander gebracht werden, wobei die Mengen der Verbindungen a) und b) so gewählt werden, daß das Verhältnis der Hydroxylgruppen (einschließlich derjenigen des Wassers) und/oder Carboxylgruppen zu den Neodymatomen 2:1 bis 100:1 beträgt, die Komponenten so zusammengebracht werden, daß ein katalytisches Gemisch erhalten wird, bei dem das Al/Nd Atomverhältnis 20:1 bis 200:1 und das Halogen/Nd Atomverhältnis 0,2:1 bis 3:1 beträgt, die Lösungsmittel oder Verdünnungsmittel, wenn verwendet, nicht mehr als 2 Gew.-%, bezogen auf das Butadienmonomer, ausmachen,

— das katalytische Gemisch und flüssiges Butadienmonomer, gegebenenfalls vorgemischt, in einem Anteil von $4 \times 10^4$ bis $4 \times 10^5$ gmol Butadien je gAtom Nd an einem Ende eines langen Polymerisationsreaktors eingespeist werden, in dem das Gemisch unter Bedingungen der Kolbenströmung polymerisiert wird, während eine Einlaßtemperatur von nicht weniger als 30°C und einer Auslaßtemperatur von nicht mehr als 130°C eingehalten und die Temperatur innerhalb dieses Bereiches durch partielles Verdampfen von monomerem Butadien aus der flüssigen Polymerisationsphase geregelt wird, bis ein Gemisch mit einem Polymergehalt von etwa 25 bis etwa 70 Gew.-% erhalten und dieses an dem anderen Ende des Reaktors ausgetragen wird,

— das cis-1,4-Polybutadien von dem ausgetragenen Gemisch abgetrennt und gewonnen wird.

7

2. Verfahren nach Anspruch 1, dadurch gekennzeichnet, daß der Kohlenwasserstoffträger für den Katalysator unter Butan, Pentan, Hexan und Heptan, linear oder verzweigt, oder deren Gemischen, Paraffinöl oder Kohlenwasserstoffölen für mit Öl gestreckte Polybutadienformulierungen ausgewählt wird.

3. Verfahren nach Anspruch 1, dadurch gekennzeichnet, daß die Neodymverbindungen ausgewählt werden unter Neodymoxid ($Nd_2O_3$), Neodym-tributylat und Neodym-trinaphthenaten.

4. Verfahren nach Anspruch 1, dadurch gekennzeichnet, daß die organischen Verbindungen, die Hydroxyl- oder Carboxylgruppen enthalten, unter Butylalkohol und Naphthensäuren ausgewählt werden.

5. Verfahren nach Anspruch 1, dadurch gekennzeichnet, daß die halogenierten Verbindungen unter Chlorwasserstoffsäure, Diethylaluminiumchlorid, Ethylaluminiumdichlorid, Aluminiumtrichlorid, tert.-Butylchlorid, Benzylchlorid und Benzoylchlorid ausgewählt werden.

6. Verfahren nach Anspruch 1, dadurch gekennzeichnet, daß die Aluminium-Organometallverbindungen und entsprechenden Hydridderivate ausgewählt werden unter Aluminiumtrialkylverbindungen und Aluminiumalkylhydriden.

7. Verfahren nach Anspruch 6, dadurch gekennzeichnet, daß die Aluminium- verbindungen ausgewählt werden unter Triethylaluminium, Triisobutylaluminium und Diisobutylaluminiummonohydrid.

8. Verfahren nach Anspruch 1, dadurch gekennzeichnet, daß Wasser zu dem Katalysator in einer solchen Menge gegeben wird, daß das Verhältnis der Aluminiumatome der Aluminium-Organometallverbindung oder des entsprechenden Hydridderivats zu den zugesetzten Molen Wasser 1:1 bis 5:1 beträgt.

9. Verfahren nach Anspruch 8, dadurch gekennzeichnet, daß das Verhältnis 2:1 beträgt.

10. Verfahren nach Anspruch 1, dadurch gekennzeichnet, daß das Verhältnis von Hydroxylgruppen (einschließlich derjenigen des Wassers) und/oder Carboxylgruppen zu Neodymatomen im Bereich von 3:1 bis 30:1, das Verhältnis von Aluminiumatomen zu Neodymatomen im Bereich von 25:1 bis 80:1 und das Verhältnis von Halogenatomen zu Neodymatomen im Bereich von 1:1 bis 2:1 liegt.

11. Verfahren nach Anspruch 1, dadurch gekennzeichnet, daß die Polymerisation bei einem Druck von 3 bis 18 bar absolut durchgeführt wird.

12. Verfahren nach Anspruch 1, dadurch gekennzeichnet, daß die Polymerisation zwischen einer Einlaßtemperatur im Bereich von 50 bis 60°C und einer Auslaßtemperatur im Bereich von 80 bis 100°C durchgeführt wird.

13. Verfahren nach Anspruch 1, dadurch gekennzeichnet, daß die Verweilzeit während der Polymerisation 10 bis 120 min beträgt.

14. Verfahren nach Anspruch 13, dadurch gekennzeichnet, daß die Verweilzeit 20 bis 60 min beträgt.

15. Verfahren nach Anspruch 1, dadurch gekennzeichnet, daß die Polymerisation in einer Vorrichtung des selbstreinigenden Einfachoder Doppelextrudertypus durchgeführt wird.

16. Verfahren nach Anspruch 1, dadurch gekennzeichnet, daß das während der Polymerisation verdampfte monomere Butadien kondensiert und direkt in die Polymerisationsstufe zurückgeführt wird.

17. Verfahren nach Anspruch 1, dadurch gekennzeichnet, daß die die Polymerisation abbrechenden Mittel und Stabilisatoren gegen thermooxidativen Abbau dem aus der Polymerisationsstufe kommenden Gemisch in einer Mischvorrichtung zugesetzt werden, die mit dem Polymerisationsreaktor in Reihe geschaltet ist.

18. Verfahren nach Anspruch 17, dadurch gekennzeichnet, daß die die Polymerisation abbrechenden Mittel unter Wasser und aliphatischen $C_8$—$C_{18}$-Alkoholen ausgewählt werden.

19. Verfahren nach Anspruch 18, dadurch gekennzeichnet, daß basisch machende Verbindungen, ausgewählt unter Ammoniak, Aminen, Epoxiden und organischen Salzen (Alkoholaten und Carboxylaten) von Alkalimetallen, dem Wasser und den Alkoholen zugesetzt werden.

20. Verfahren nach Anspruch 17, dadurch gekennzeichnet, daß Antioxidantien und Radikale abfangende Mittel, wie sekundäre Amine und Epoxide, mit den die Polymerisation abbrechenden Mitteln kombiniert werden.

21. Verfahren nach den Ansprüche 17 bis 20, dadurch gekennzeichnet, daß die die Polymerisation abbrechenden Mittel und die die Radikale abfangenden Mittel in Form einer Emulsion in Gegenwart von Butadien eingespeist werden.

22. Verfahren nach Anspruch 1, dadurch gekennzeichnet, daß das Reaktionsgemisch mit seinen Zusätzen von niedrig siedenden Substanzen befreit wird, indem bei einer Temperatur von 100 bis 180°C bei Atmosphärendruck in einer beheizten Schneckenvorrichtung gearbeitet wird, die mit der Mischvorrichtung des Anspruchs 17 in Reihe geschaltet ist.

**Revendications**

1. Procédé de préparation de cis 1,4-polybutadiène par polymérisation catalytique du butadiène, caractérisé en ce qu'on prépare un mélange catalytique en mettant en contact, au sein d'un milieu hydrocarboné inerte:

a) au moins un composé du néodyme choisi parmi l'oxyde, les alcoolates, les phénates et les carboxylates de néodyme;

b) au moins un composé organique contenant des groupes hydroxyles (alcooliques ou phénoliques)

8

ou carboxyles, choisis parmi les alcools, les phénols et les acides carboxyliques, avec addition facultative d'eau;

c) au moins un composé halogéné choisi parmi les halogénures d'alkyle secondaires ou tertiaires, les halogénures d'aryle ou d'alkylaryle, les halogénures d'acides organiques, les halogénures métalliques ou organométalliques, les acides halogénhydriques et les halogènes, et

d) au moins un composé organométallique d'aluminium ou l'un de ses hydrures dérivés correspondants,

les quantités des composés a) et b) étant telles que le rapport des groupes hydroxyles (y compris ceux de l'eau) et/ou des groupes carboxyles aux atomes de néodyme soit compris entre 2:1 et 100:1, lesdits composants étant mis en contact de manière à obtenir un mélange catalytique dans lequel le rapport atomique Al/Nd est compris entre 20:1 et 200:1 et le rapport atomique halogène/Nd est compris entre 0,2:1 et 3:1, les solvants ou diluants éventuels ne dépassage pas 2 % du poids du butadiène monomère; on envoie continuellement ledit mélange catalytique et le butadiène monomère liquide, après un mélange préalable facultatif, dans une proportion comprise entre $4 \times 10^4$ et $4 \times 10^5$ moles-g de butadiène par atome-g de Nd, vers une extrémité d'un réacteur de polymérisation allongé dans lequel on polymérise le mélange dans des conditions d'écoulement en bloc, tout en maintenant une température d'entrée qui n'est pas inférieure à 30°C et une température de sortie qui ne dépasse pas 130°C et en réglant la température dans ladite gamme par évaporation partielle du batadiène monomère hors de la phase de polymérisation liquide, jusqu'à obtenir un mélange ayant une teneur en polymère comprise entre environ 25 % et environ 70 % en poids, celui-ci étant déchargé par l'autre extrémité du réacteur; on sépare et on récupère le cis-1,4-polybutadiène dudit mélange déchargé.

2. Procédé selon la revendication 1, caractérisé en ce qu'on choisit le véhicule hydrocarboné pour le catalyseur parmi le butane, le pentane, l'hexane et l'heptane, linéaires ou ramifiés, ou leurs mélanges, les huiles paraffiniques ou les huiles hydrocarbonées pour les compositions de polybutadiène allongées à l'huile.

3. Procédé selon la revendication 1, caractérisé en ce qu'on choisit les composés du néodyme parmi l'oxyde de néodyme ($Nd_2O_3$), le tributylate de néodyme et les trinaphténates de néodyme.

4. Procédé selon la revendication 1, caractérisé en ce qu'on choisit les composés organiques contenant des groupes hydroxyles ou carboxyles parmi l'alcool butylique et les acides naphténiques.

5. Procédé selon la revendication 1, caractérisé en ce qu'on choisit les composés halogénés parmi l'acide chlorhydrique, le chlorure de diéthylaluminium, le dichlorure d'éthylaluminium, le trichlorure d'aluminium, le chlorure de t-butyle, le chlorure de benzyle et le chlorure de benzoyle.

6. Procédé selon la revendication 1, caractérisé en ce qu'on choisit les composés organométalliques d'aluminium et les hydrures dérivés parmi les aluminium-trialkyle et les hydrures d'aluminium-alkyle.

7. Procédé selon la revendication 6, caractérisé en ce qu'on choisit lesdits composés d'aluminium parmi le triéthyl-aluminium, le triisobutyl-aluminium et le monohydrure de diisobutyl-aluminium.

8. Procédé selon la revendication 1, caractérisé en ce qu'on ajoute de l'eau au catalyseur en une quantité telle que le rapport des atomes d'aluminium du composé organométallique d'aluminium ou de l'hydrure dérivé aux moles d'eau ajoutées soit compris entre 1:1 et 5:1.

9. Procédé selon la revendication 8, caractérisé en ce que ledit rapport est de l'ordre de 2:1.

10. Procédé selon la revendication 1, caractérisé en ce que le rapport des groupes hydroxyles (y compris ceux de l'eau) et/ou des groupes carboxyles aux atomes de néodyme est de l'ordre de 3:1 à 30:1, le rapport des atomes d'aluminium aux atomes de néodyme est de l'ordre de 25:1 à 80:1, et le rapport des atomes d'halogène aux atomes de néodyme est de l'ordre de 1:1 à 2:1.

11. Procédé selon la revendication 1, caractérisé en ce qu'on effectue la polymérisation sous une pression absolue de 3 à 18 bars.

12. Procédé selon la revendication 1, caractérisé en ce qu'on effectue la polymérisation entre une température d'entrée de l'ordre de 50 à 60°C et une température de sortie de l'ordre de 80 à 100°C.

13. Procédé selon la revendication 1, caractérisé en ce que la durée de séjour pendant la polymérisation varie entre 10 et 120 minutes.

14. Procédé selon la revendication 13, caractérisé en ce que ladite durée de séjour est de l'ordre de 20 à 60 minutes.

15. Procédé selon la revendication 1, caractérisé en ce qu'on effectue la polymérisation dans un appareil du type extrudeuse simple ou double auto-nettoyante.

16. Procédé selon la revendication 1, caractérisé en ce qu'on condense et on recycle directement à l'étage de polymérisation le butadiène monomère évaporé pendant la polymérisation.

17. Procédé selon la revendication 1, caractérisé en ce qu'on incorpore des agents d'arrêt de polymérisation et des agents stabilisants contre une dégradation thermooxydante, dans le mélange qui sort de l'étage de polymérisation, dans un dispositif mélangeur relié en série avec le réacteur de polymérisation.

18. Procédé selon la revendication 17, caractérisé en ce que les agents d'arrêt de polymérisation sont choisis parmi l'eau et les alcools aliphatiques en $C_{8-18}$.

19. Procédé selon la revendication 18, caractérisé en ce qu'on ajoute à l'eau et aux alcools des

9

**0 127 236**

composés d'alcalinisation choisis parmi l'ammoniac, les amines, les époxydes et les sels organiques (alcoolates et carboxylates) de métaux alcalins.

20. Procédé selon la revendication 17, caractérisé en ce que des antioxydants et des agents de capture de radicaux tels que des amines secondaires et des époxydes sont associés avec les agents d'arrêt de polymérisation.

21. Procédé selon les revendication 17 à 20, caractérisé en ce qu'on introduit lesdits agents d'arrêt de polymérisation et lesdits agents antiradicaux sous forme d'une émulsion en présence de butadiène.

22. Procédé selon la revendication 1, caractérisé en ce qu'on débarrasse le mélange de réaction, avec ses additifs, des substances à bas point d'ébullition en opérant à une température entre 100 et 180°C, sous pression atmosphérique, dans un dispositif chauffé, à vis, raccordé en série avec le dispositif mélangeur selon la revendication 17.